Europäisches Patentamt

European Patent Office

Office européen des brevets

(19)

(11) Numéro de publication: **0 408 410 A1**

# DEMANDE DE BREVET EUROPEEN

(12)

(21) Numéro de dépôt: 90401809.0

(22) Date de dépôt: 26.06.90

(51) Int. Cl.5: **B05B 15/02**, G01M 19/00

(30) Priorité: 06.07.89 FR 8909093

(43) Date de publication de la demande:
16.01.91 Bulletin 91/03

(84) Etats contractants désignés:
AT BE CH DE ES GB IT LI LU NL SE

(71) Demandeur: VALOIS Société Anonyme dite:
Boîte Postale G Le Prieuré
F-27110 Le Neubourg(FR)

(72) Inventeur: Mazurie, Alain
5, allée de la Garenne
F-27110 Le Neubourg(FR)

(74) Mandataire: Pinguet, André
Cabinet de Propriété Industrielle CAPRI 28
bis, avenue Mozart
F-75016 Paris(FR)

(54) **Procédé et dispositif pour le contrôle de canalisations de petit diamètre telles que des gicleurs.**

(57) Procédé de contrôle de canalisation de petit diamètre, du type gicleur, caractérisé en ce que de l'air ou autre gaz est soufflé à une extrémité de la canalisation (11), et en ce qu'à l'autre extrémité de la canalisation (18) on mesure l'intensité sonore, notamment des ultrasons, à la sortie de la canalisation, puis, on transforme (19) le niveau sonore en un signal électrique, la canalisation étant alors jugée acceptable quand le signal électrique est compris entre deux valeurs déterminées.

EP 0 408 410 A1

La présente invention a trait à un procédé et un dispositif pour le contrôle de canalisations de petit diamètre telles que des gicleurs. Certains produits, comme par exemple des vaporisateurs, comportent des gicleurs de pulvérisation et sont fabriqués en très grandes séries. Malgré le soin apporté à la fabrication, la qualité et la précision des machines, il n'est pas à exclure que sur le grand nombre, il y ait parfois un gicleur partiellement ou totalement bouché. Même si cela se produit très rarement, c'est l'occasion d'un incident. Si faible soit le prix du gicleur en lui-même, c'est le prix d'un flacon de parfum ou d'un produit pharmaceutique qui risque d'être perdu. Il s'ensuit une réclamation et même si la proportion en est très faible, ces incidents se remarquent et font une mauvaise impression dans le circuit commercial. Vu le prix de ces accessoires, il est apparu difficile jusqu'ici de procéder à des contrôles systématiques sans élever de façon prohibitive le prix de ces objets.

La présente invention a pour but un procédé et un dispositif permettant de réaliser un contrôle systématique sans accroître le prix de revient des produits. Comme cela ressortira de la description et des revendications qui suivent, l'invention peut s'appliquer à toutes sortes de gicleurs et produits analogues, essentiellement des canalisations fines pour vérifier qu'elles ne sont pas obturées, surtout des produits prévus pour être fabriqués en grandes séries et à bon marché.

L'invention a donc pour objet un procédé de contrôle de canalisation de petit diamètre, du type gicleur, caractérisé en ce que de l'air ou autre gaz est soufflé à une extrémité de la canalisation, et en ce qu'à l'autre extrémité de la canalisation on mesure l'intensité sonore, notamment des ultrasons, à la sortie de la canalisation, puis, on transforme le niveau sonore en un signal électrique, la canalisation étant alors jugée acceptable quand le signal électrique est compris entre deux valeurs déterminées.

L'invention a aussi pour objet un dispositif pour la mise en oeuvre de ce procédé, remarquable notamment en ce qu'il comporte un moyen pour amener une canalisation pour en placer une extrémité au voisinage d'un détecteur de sons, notamment des ultrasons, et un moyen pour amener une buse de soufflage de gaz en contact d'étanchéité avec l'autre extrémité de ladite canalisation, des moyens étant prévus pour déclencher ensuite le soufflage de gaz par ladite buse, et des moyens étant prévus d'une part pour transformer en signaux électriques les sons détectés, et d'autre part pour déclencher des ordres selon la position su signal électrique par rapport à deux valeurs déterminées.

D'autres caractéristiques et avantages de l'invention apparaîtront au cours de la description suivante, donnée à titre d'exemple non limitatif, en regard du dessins ci-joint et qui fera mieux comprendre comment l'invention peut être réalisée.

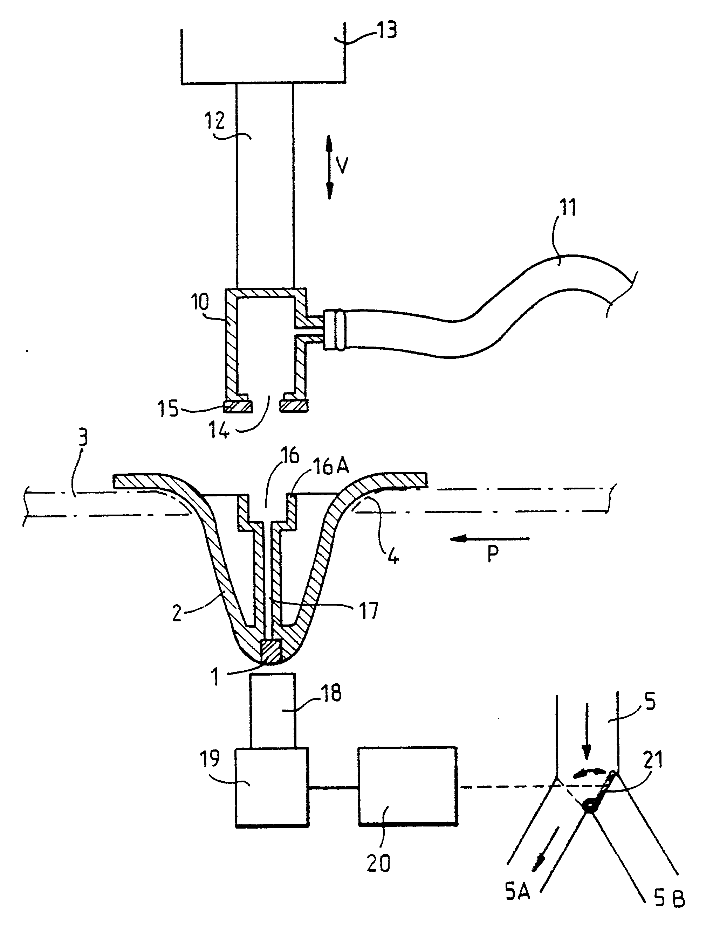

La figure unique du dessin ci-joint est une vue en élévation avec coupe partielle d'un exemple de dispositif pour la mise en oeuvre de l'invention au cours d'une phase opératoire.

Dans une installation de fabrication industrielle de vaporisateurs, on cherche à contrôler la qualité de gicleurs 1 montés sur des boutons poussoirs 2. L'installation comporte entre autres une machine sur laquelle les gicleurs sont mis en place dans les poussoirs. Une telle machine comporte un plateau mobile 3, par exemple rotatif, avec des alvéoles 4 placées à intervalles égaux pour recevoir les poussoirs, de sorte qu'à chaque rotation les alvéoles passent successivement à des emplacements où des outils peuvent exécuter une opération déterminée, pendant un temps d'arrêt de la rotation du plateau. A un emplacement, le gicleur 1 est mis en place, dans une cavité prévue à cet effet dans le poussoir, par un outillage approprié. Puis, après une ou plusieurs rotations, les poussoirs sont éjectés dans un conduit 5 qui les déverse dans un panier ou les achemine vers une autre machine. Selon l'invention, on utilise un des emplacements disponibles sur la machine pour contrôler le gicleur mis en place. On contrôle ainsi le gicleur et son montage.

Le dispositif de contrôle comporte une buse de soufflage 10 alimentée par un flexible 11. La buse de soufflage est mobile (flèche V). Elle est montée à l'extrémité de la tige 12 d'un vérin pneumatique 13 et comporte autour de l'orifice de sortie 14 un joint 15. Le poussoir est placé sur le plateau 3 de façon qu'après descente de la buse de soufflage 10, le joint 15 soit appliqué sur le pourtour 16A de la cavité 16 d'emmanchement du poussoir sur la soupape du vaporisateur (non représenté). La buse peut alors souffler de l'air (ou autre gaz) dans la cavité 16 qui communique avec le gicleur 1 par le canal d'éjection 17. Un détecteur de sons 18, de préférence un détecteur d'ultrasons, est disposé, à poste fixe, sous le poussoir, c'est-à-dire à l'emplacement prévu sur le trajet du plateau 3 pour le contrôle, et à une hauteur permettant de mesurer le niveau sonore à la sortie du gicleur 1. Pendant un arrêt du plateau, c'est-à-dire pendant qu'à un autre emplacement un gicleur est mis en place dans un poussoir, une opération de contrôle est effectuée à l'emplacement prévu. Le vérin 13 est actionné, la buse 10 vient avec le joint 15 s'appliquer contre le rebord 16A du poussoir, un soufflage d'air est déclenché et le niveau sonore est mesuré par le détecteur 18. Le signal sonore mesuré en 18 est transformé en un signal électrique par un transducteur approprié 19, et le signal électrique est envoyé à un bloc de commande 20 qui, en fonction de l'intensité reçue, commande un aiguillage 21 sur le conduit 5 pour envoyer le poussoir éjecté à un emplacement ultérieur soit dans une branche 5A, soit dans une branche 5B, selon qu'il est bon ou mauvais.

Si le gicleur est en place et fonctionne bien, on doit avoir un niveau sonore déterminé. Si le niveau de bruit est insuffisant, le gicleur est bouché, en tout ou en partie. Le poussoir sera éjecté par l'aiguillage 21. Si le niveau sonore est trop élevé, c'est qu'il n'y a pas de gicleur ou qu'il est défectueux. Le poussoir sera également éjecté par l'aiguillage 21. Si le niveau sonore est correct, c'est-à-dire entre deux limites à fixer par réglage, le poussoir sera aiguillé dans la bonne direction.

Ce procédé, et le dispositif qui le met en oeuvre, sont simples, sûrs et efficaces. Une fois installé, les opérations de fabrication ne sont pas retardées. Il n'y a pas de modification du prix de revient du vaporisateur. Le vaporisateur cependant est contrôlé, les mauvais vaporisateurs sont évacués. On peut donc garantir les produits, ce qui leur donne une valeur ajoutée supplémentaire.

## Revendications

1.- Procédé de contrôle en fin de fabrication de canalisation de petit diamètre, du type gicleur, utilisant la mesure de l'intensité sonore, notamment des ultrasons, à la sortie de la canalisation, et la transformation du niveau sonore en signal électrique, caractérisé en ce que de l'air ou autre gaz est soufflé à une extrémité de la canalisation, et en ce qu'à l'autre extrémité de la canalisation on mesure l'intensité sonore, notamment des ultrasons, à la sortie de la canalisation, puis, on transforme le niveau sonore en un signal électrique, la canalisation étant alors jugée acceptable quand le signal électrique est compris entre deux valeurs déterminées.

2.- Dispositif pour la mise en oeuvre du procédé selon la revendication 1, caractérisé en ce qu'il comporte un moyen (3) pour amener une canalisation pour en placer une extrémité au voisinage d'un détecteur de sons (18), notamment des ultrasons, et un moyen (12, 13) pour amener une buse de soufflage (10) de gaz en contact d'étanchéité avec l'autre extrémité de ladite canalisation, des moyens étant prévus pour déclencher ensuite le soufflage de gaz par ladite buse, et des moyens (19, 20) étant prévus d'une part pour transformer en signaux électriques les sons détectés, et d'autre part pour déclencher des ordres selon la position su signal électrique par rapport à deux valeurs déterminées.

3.- Dispositif selon la revendication 2, caractérisé en ce que le moyen pour amener une canalisation au voisinage d'un détecteur de sons est un plateau (3), notamment rotatif d'une machine automatique à transfert pas à pas, se déplaçant dans son plan.

4.- Dispositif selon une des revendications 2 ou 3, caractérisé en ce que la buse de soufflage (10) est portée à l'extrémité d'une tige (12) d'un piston commandé par un vérin (13) pour exécuter un mouvement alternatif.

Office européen
des brevets

RAPPORT DE RECHERCHE
EUROPEENNE

Numéro de la demande

EP 90 40 1809

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 2, no. 228 (C-303)[1951], 13 septembre 1985; & JP-A-60 087 870 (ASAHI OOKUMA SANGYO K.K.) 17-05-1985 * En entier * | 1 | B 05 B 15/02 G 01 M 19/00 |
| | – – – | | |
| A | EP-A-0 084 445  (NORDSON CORP.) * Abrégé; figures 3,6,7; page 11, ligne 3 - page 12, ligne 10 * | 1 | |
| | – – – – – | | |

DOMAINES TECHNIQUES
RECHERCHES (Int. Cl.5)

B 05 B
G 01 M
F 27 D

Le présent rapport de recherche a été établi pour toutes les revendications

| Lieu de la recherche | Date d'achèvement de la recherche | Examinateur |
|---|---|---|
| La Haye | 03 octobre 90 | GUASTAVINO L. |